# EUROPEAN PATENT SPECIFICATION

(11) **EP 1 568 265 B1**
(45) Date of publication and mention of the grant of the patent: **17.09.2008**
(21) Application number: 05075466.2
(22) Date of filing: 25.02.2005
(51) Int. Cl.: A01D 45/00, A01D 57/20, A01G 1/04

(54) **Harvesting device, device for performing a bed and/or crop treatment, and harvesting method**
Erntevorrichtung, Vorrichtung zum Durchführen einer Bett- und/oder Gewachsbehandlung, und Ernteverfahren
Dispositif de récolte, dispositif pour réaliser un traitement d'un lit et/ou d'une culture, et méthode de récolte.

(30) Priority: 26.02.2004 NL 1025584
(43) Date of publication of application: 31.08.2005
(73) Proprietor: Van den Top, Hendrik, NL-3771 AH Barneveld (NL)
(72) Inventor: Van den Top, Hendrik, NL-3771 AH Barneveld (NL)
(74) Representative: Land, Addick Adrianus Gosling

(56) References cited:
- EP-A- 0 292 075
- EP-A- 0 421 522
- DE-C1- 3 910 230
- GB-A- 2 077 562
- NL-A- 8 201 720
- US-A- 3 636 687
- US-A- 4 480 430

## Description

The present invention relates to a harvesting device, device for performing a bed and/or crop treatment, and harvesting method. Such crops are for instance crops which can be cut off close to the ground. Such crops comprise toadstools, and more in particular mushrooms and other fungi.

US-A-3636687 discloses a harvesting device for crops, such as asparagus, comprising a frame, a separating member, a discharge conveyor and an intermediate conveyor extending from the separating member to the discharge conveyor. The device comprises three sections which are adapted to move over respective rows to harvest or cut the spears that have attained a predetermined height.

EP-A-0 421 522 discloses a harvesting device for crops such as toadstools as described in the preamble of claim 1. The device comprises a frame, a knife, and an intermediate conveyor and a discharge conveyor.

The applicant for the present patent application already has a number of developments in his name for harvesting such crops. Harvesting machines resulting from these earlier developments are now being successfully applied for a part of the mushroom harvests.

In order to improve the known harvesting device, the present invention relates to a harvesting device for crops, such as toadstools, in accordance with claim 1.

Using the intermediate conveyor the crops can be transferred in a cleaning manner from the separating member to the discharge conveyor. In preferred embodiments the separating member, such as a cutting member or a knife, can further take a narrow form as seen in the cutting direction, wherein the intermediate conveyor serves for the transport from the separating member close to the level of the crops to the discharge conveyor. In known devices this transport takes place from this level to the discharge conveyor by means of a jolting movement over a transport plate which served as knife on the front side. Here toadstools such as mushrooms are for instance bruised such that they must be preserved relatively quickly. In view of the period of several days usually necessary for making the toadstools available to the consumer in fresh state, for instance via a retail outlet, they are generally no longer suitable for sale to the (critical) consumer due to the bruises made by the plate.

A cleaning transport to the level of the discharge conveyor becomes possible by means of the intermediate conveyor extending from the separating member to the discharge conveyor, which intermediate conveyor makes possible a separating member of small dimensions in the direction of separation. Non-bruised toadstools can hereby be made available to the (critical) consumer via the retail outlet after a long period, such as several days or weeks.

According to the invention, the intermediate conveyor comprises guide means for maintaining the orientation of the intermediate conveyor relative to the transverse direction thereof. Relatively short but wide conveyor belts tend to deviate in transverse direction from their desired path. This deflection of the belt is prevented or reduced by means of the guide means. It hereby becomes easier to apply the short but relatively wide intermediate conveyor desired in this embodiment. An example of such a width is a conveyor of for instance about 1.20 m - 1.40 m over a length of for instance about 20 - 40 cm. Other length-width ratios are also possible. The width of the conveyor is here preferably adapted to the width of the harvesting device.

The intermediate conveyor comprises a wire mesh belt. A wire mesh belt for instance provides the possibility of achieving the small desired diameter specified in the foregoing. Such a wire mesh belt can for instance return via the small diameter of the return bend, which can for instance be defined by the return guide rod. A further advantage of the wire mesh belt is that dirt such as sand or compost residues can fall through it.

In a further preferred embodiment, the intermediate conveyor comprises a diameter on the side of the cutting member which is smaller than the height of the crop or preferably 0.1 to 5 cm, more preferably 1 to 3 cm or 1 to 2 cm. During for instance harvesting of mushrooms several centimetres in height, this feature has the advantage that the mushrooms only need overcome a low height in order to reach the intermediate conveyor, whereby the separating member can for instance be given a small form. Bruising of the fruit is hereby also reduced further by the small difference in height.

On the sides of the separating member the intermediate conveyor comprises a return guide rod with guide channels. By applying such a rod with about a diameter as designated in the foregoing, the intermediate conveyor can acquire the desired small return diameter. The guide channels further provide the desired effect stated in the foregoing of guiding the intermediate conveyor.

This wire mesh belt is preferably manufactured from metal and/or plastic. Such a wire mesh belt provides the feature that, with a suitable design pattern, it comprises tracking projections which fit in the guide channels with a suitable choice of design for the wire mesh belt and the positioning of these guide channels in for instance a return guide rod, whereby the wire mesh belt will circulate in the desired tracking. The return guide rod is preferably further provided at least partly or on the surface with smooth metal and/or a plastic such as for instance teflon. The return guiding of the conveyor will hereby take place smoothly and with little wear.

In a further preferred embodiment, the separating member comprises a tensioning frame. It hereby becomes possible to place a cutting member such as a knife under bias. It hereby becomes possible to apply such a knife with a small size in the cutting direction. Advantages hereof are described in the foregoing. The tensioning frame is also suitable for keeping tensioned for instance a cutting ribbon or a cutting wire, which cutting means can be considered as alternative.

In a further preferred embodiment, the device comprises a support member extending at least above the separating member and/or the intermediate conveyor for the purpose of supporting the crops before, during and/or after severing thereof and/or during the transport by means of the intermediate conveyor. This support member provides the advantage that the crops are held upright or at least held as upright as possible during the severing and transport thereof. Bruising of the crops is hereby limited further, which increases the market quality thereof, even after some days.

The support member preferably comprises an endless belt. It hereby becomes possible to give the support member substantially the same speed during supporting as the speed of forward movement of the harvesting device during harvesting. The support member is hereby situated in a motionless position relative to the toadstool, whereby the toadstool is fixed and supported in stable manner, whereby possible bruising is limited further.

Crops such as toadstools are generally cultivated in culture beds. For efficient use of space such culture beds are generally placed above each other in layers in a culture area. A growing area can hereby be utilized efficiently. A drawback of such stacking of culture beds is that uprights have to be used to support the culture bed holders. A problem is that through the use of these uprights damage such as bruising is caused during unloading of mushrooms, for instance because mushrooms knock against the uprights and because the mushrooms make a falling movement over a relatively great distance.

A further aspect of the present invention relates to a harvesting device for crops in accordance with claim 9. The solution according to this aspect of the present invention is that, because the discharge conveyor can switch direction, the crops are discharged alternately on the one side or on the other side of the device.

In a preferred embodiment hereof, the discharge conveyor comprises a conveyor belt which can move in two directions. For part of the time such a conveyor belt can push out the crops on the one side, and for another part of the time can push out the crops on the other side. During the period in which the direction is changed the conveyor serves as storage buffer.

The discharge conveyor is preferably adapted to protrude alternately from either side of the harvesting device. The discharge conveyor is here wider over some distance than the width of the device. The conveyor will preferably move in the direction where the conveyor protrudes from the harvesting device. The device is hereby adapted to discharge the crops in the direction of a collecting means such as a container or a further discharge conveyor. During forward movement of the harvesting device the discharge conveyor of the device can herein fit closely onto this further discharge conveyor, whereby a possible falling movement can be limited to a minimum, whereby damage such as bruising of crops can be minimized.

A further aspect of the invention relates to a device for performing a bed and/or crop treatment comprising a harvesting device as claimed in one or more of the claims 1-11, comprising:
- a frame provided with front and rear wheels for travel thereof, and
- height-adjusting means for adjusting the working height of the device, wherein the frame of the harvesting device can be connected to the frame of the device. It hereby becomes possible to combine different measures as described in the foregoing to form a height-adjustable harvesting device. An advantage hereof is that the device can be applied in the case of culture bed holders in which the culture bed is situated at variable height. It is also noted that the different aspects according to the present invention can be freely combined, likewise without mobile frame and/or height-adjusting means.

The present invention is advantageously used in relation to a culture bed construction for crops such as toadstools, comprising:
- a number of culture bed holders ordered one above another,
- a number of substantially vertical uprights to which the culture bed holders are fixed,
- wherein the vertical uprights are arranged alternately on either side of the culture bed construction. Such a culture bed construction has the advantage that a harvesting device with a protruding discharge conveyor can be used. During forward travel the protruding conveyor can herein be moved outward alternately on the one side and on the other side during harvesting. The harvesting can hereby be carried on continuously while the discharge conveyor protrudes alternately on the one and on the other side, wherein the alternately arranged vertical uprights of the culture bed construction are avoided. It hereby becomes possible that even for instance mushrooms which must meet the highest quality standards can be discharged in a cleaning manner and that for instance bruising and other damage can hereby be prevented.

The upper edges of the culture bed holders are preferably suitable for supporting wheels of a harvesting device.

The culture bed construction preferably comprises discharge conveyors for discharging crops supplied by means of a harvesting device as specified in the foregoing. It is recommended here that these discharge conveyors of the culture bed construction connect in the height to the discharge conveyors of the harvesting device for a cleaning connection which prevents bruising.

A further aspect according to the present invention relates to a harvesting method in accordance with any of claims 13-15. An advantage of such a method is that the harvesting operation can be carried out continuously, wherein the uprights do not form an obstruction during discharge of the crops, whereby bruising and other damage to the crops is prevented.

The method preferably comprises steps for causing the discharge conveyor to protrude alternately on both sides of the crop bed. It hereby becomes possible to have the discharge conveyor connect closely to a discharge container or further discharge container or further discharge conveyor, whereby further damage and/or bruising to the crops is prevented.

Further advantages, features and details of the present invention will be further described with reference to the accompanying figures, in which:
- figure 1 is a partly cut-away, partly schematic view of a first embodiment according to the present invention;
- figure 2 is a detail of the embodiment of figure 1;
- figure 3 is a further detail of the embodiment of figure 1;
- figure 4 is a further detail of the embodiment of figure 1;
- figure 5 is a side view of a further detail of the embodiment of figure 1;
- figures 6A and 6B are partly schematic, partly cut-away top views of a further embodiment according to the present invention.

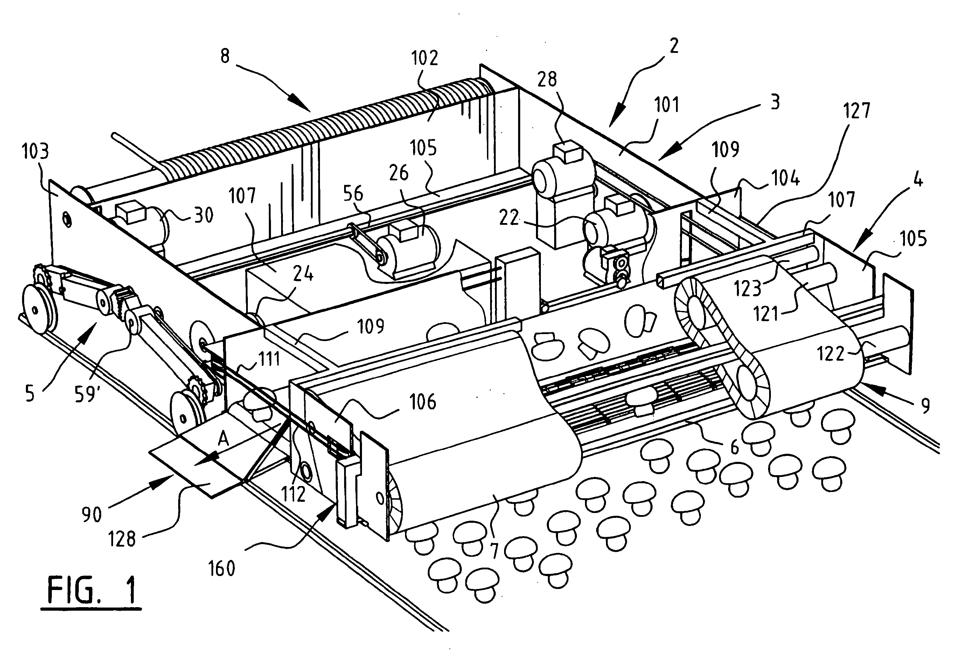

An embodiment (fig. 1) according to the present invention relates to a toadstool harvesting machine 2. This device 2 comprises a drive frame 3 as well as a processing or harvesting part 4. This harvesting part 4 can be removed from frame 3 for coupling of a different processing part such as a levelling device or a turning device. Frame 3 is formed by a number of plates 101, 102, 103, 104 in addition to a bottom plate 105. The frame is provided with a number of drive motors 24, 26, 28, 22, 30, 72. These motors will be further described together with the components they drive. The components have the same numerals in all the figures.

On both sides of frame 3 are situated height-adjusting means 5 for adjusting the height of the frame. These are connected to side plates 101, 103 of the frame by means of shafts 56, 59, 59'. Shaft 56 also functions as drive shaft for driving of the wheels, which will be further described hereinbelow.

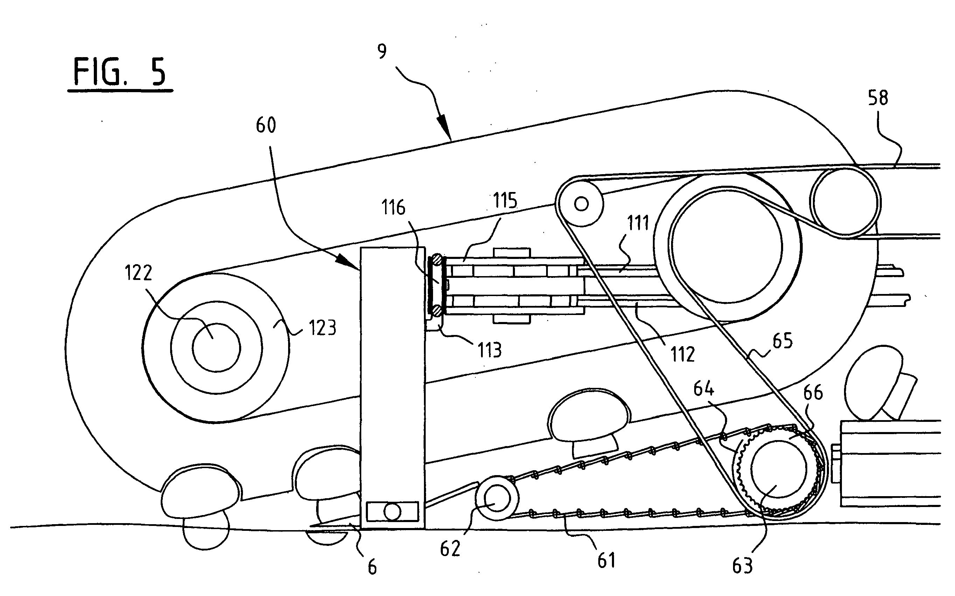

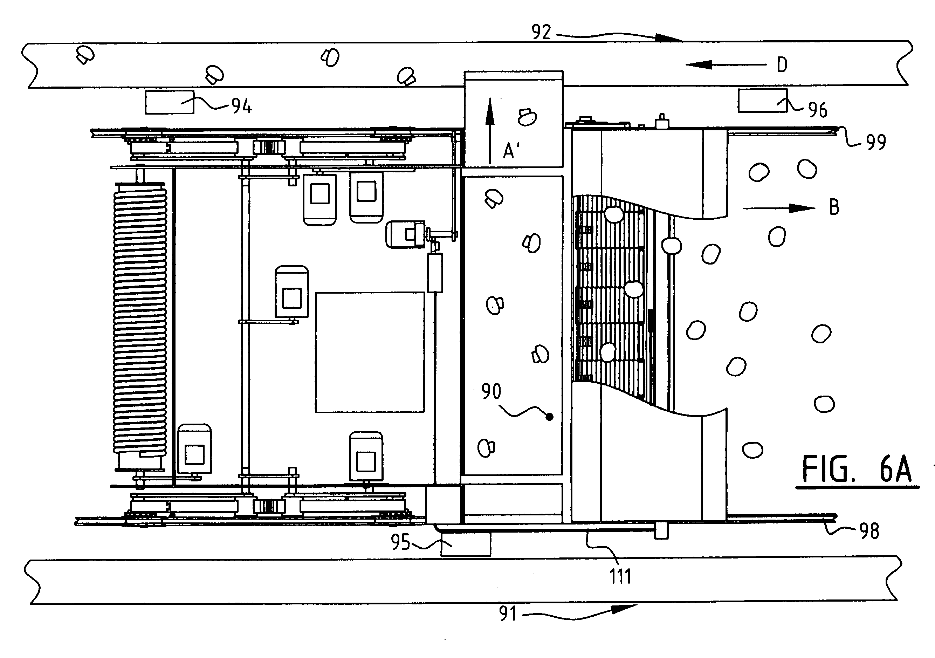

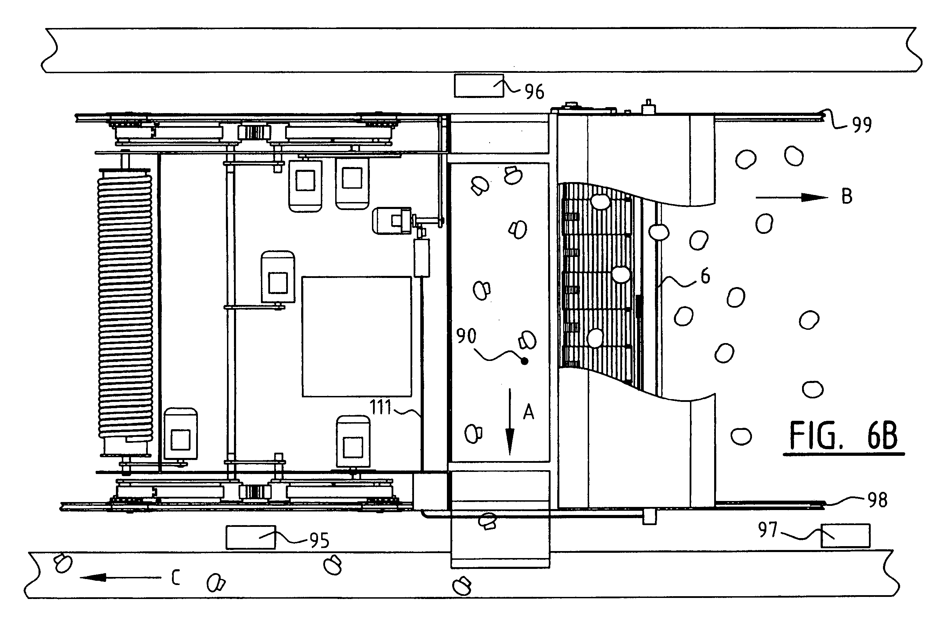

It is important that mushrooms which are being harvested using the toadstool harvesting machine 2 reach conveyor belt 90 with the least possible damage. For this purpose harvesting part 4 is shown provided with a relatively narrow knife 6 in travel direction B (fig. 6). This knife is brought under bias relative to tensioning frame 60 by means of tightening screw 127. A certain tension is recommended, since the knife acquires a desired rigidity partly as a result hereof. The knife is further provided with a horizontal front part with the cutting edge and a rear part which runs obliquely upward and which extends to a point close to wire mesh belt 61 of a wire mesh belt conveyor (see inter alia fig. 5). A fold or bend between the horizontal part and the inclining part in the knife contributes to the strength or stability of the knife. Tensioning frame 60 is mounted drivably in its longitudinal direction in the frame of harvesting part 4. The knife hereby moves with a cutting movement in transverse direction of the forward direction B of the harvesting machine.

For driving of tensioning frame 60 use is made of a drive cable 111, 112. This is one drive cable whose parts 111, 112 move in opposing directions. A cable clamp 113 is mounted on tensioning frame 60. This cable clamp 113 is likewise fixed to cable part 111 or 112. Cable 111, 112 is driven by means of motor 72. Motor 72 drives by means of an eccentric rod 108, which is connected to cable part 111 and 112 by means of a transmission 110. This transmission part 110 is arranged such that cable parts 111 and 112 make movements in opposing directions. The cable then runs via guide wheel pair 114 and guide wheel pair 115 to a reversing wheel 116, which is mounted in harvesting part 4 close to the rear side of tensioning frame 60 (fig. 5). The driving of the tensioning frame, and thereby of knife 6, is effected by the outlined movement of drive cable 111, 112.

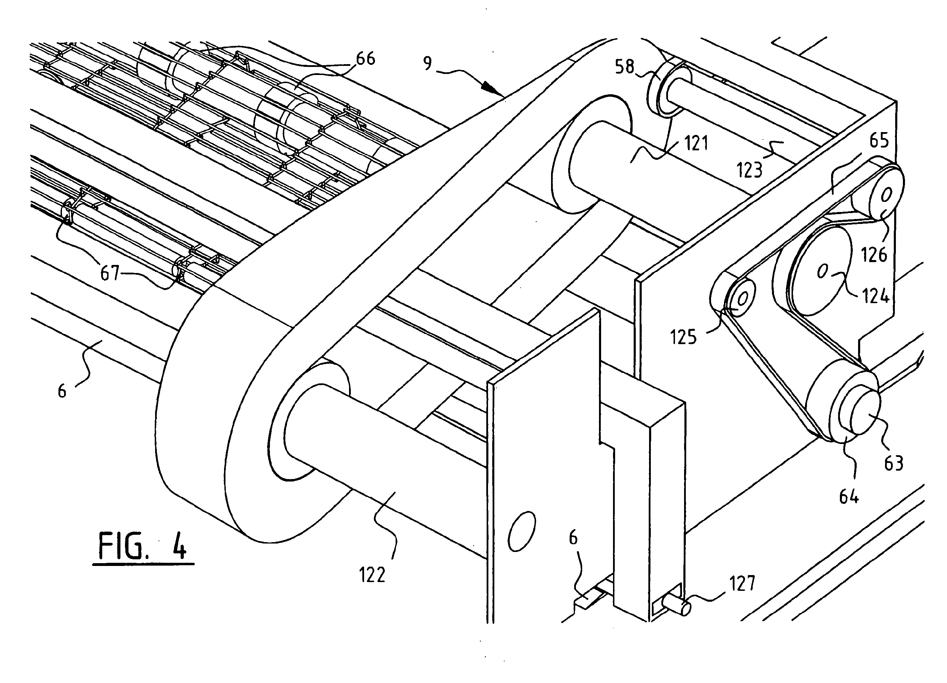

The conveyor for the wire mesh belt 61 is situated to the rear of the knife as seen in the travel direction. This conveyor comprises a return rod 62 as well as a drive rod 63. This drive rod 63 is provided with drive flanges or rings 66 which are ribbed in order to engage on transversely running mesh parts (fig. 4). Channels 67 are arranged at predetermined locations in return rod 62. The segment transitions of the wire mesh belt situated in tracking manner in wire mesh belt 61 drop into these channels during the return of wire mesh belt 61. It is important that during the transport thereof the wire mesh belt is hereby held in the correct transverse orientation relative to return rod 62. An advantage of the multiple ribbed or toothed drive rings 66 present round return rod 63 is that the wire mesh belt is driven in uniform manner, which contributes toward maintaining the correct orientation of the wire mesh belt relative to channels 67. This prevents the wire mesh belt departing from the correct orientation and making an irregular deviating movement over return rods 62 and 63. Wire mesh belt 61 is driven by means of drive rod 63 which is driven by means of toothed wheel 64 and chain 65. Chain 65 is driven by means of toothed wheel 126 which is placed on the end of shaft 123. Chain 65 further runs around guide wheel 125. Drive shaft 123 is driven by means of chain 58, which in turn is driven by motor 28.

Harvesting part 4 is further provided with a driven brush belt 9. This belt serves to hold the mushrooms upright before, during and after the severing in order to prevent damage to the mushrooms. The operation hereof is shown clearly in figures 4 and 5. The brush belt runs around reversing shafts 121 and 122, wherein reversing shaft 121 is driven by means of drive chain 65 and toothed wheel 124. The brush belt is provided on the inside with rope-like elements (not shown) to hold the brush belt in the correct positioning. These rope-like elements are guided by grooves in guide shaft 123 around reversing shafts 121 and 122. The speed of the brush belt is preferably equal to the forward speed of the harvesting device as a whole, such that the mushrooms are held by the brush belt and stabilized during the severing and transporting process by means of the knife and wire mesh belt 61.

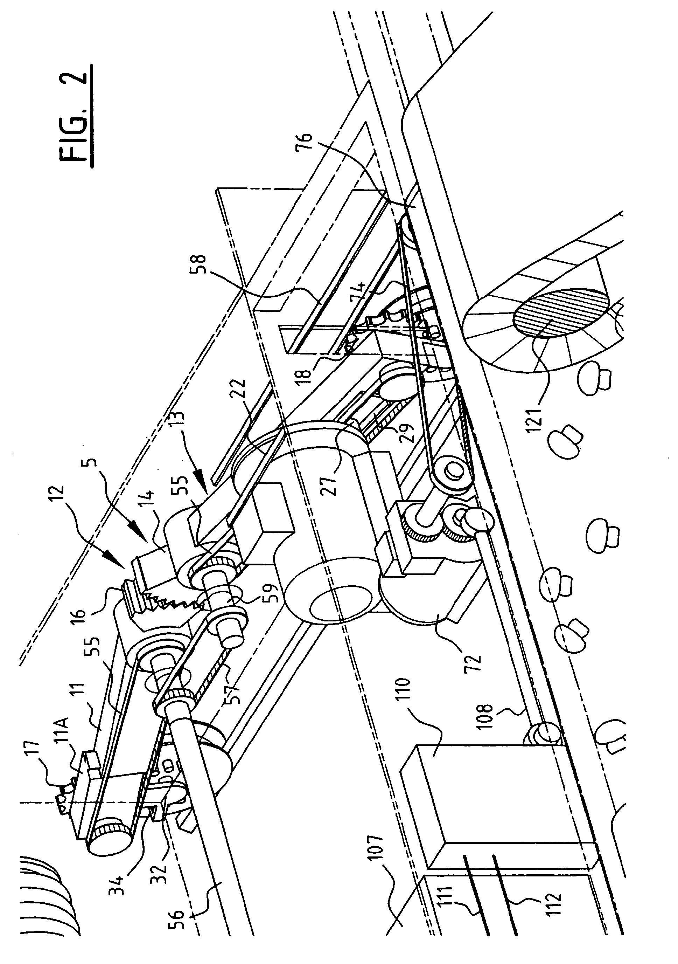

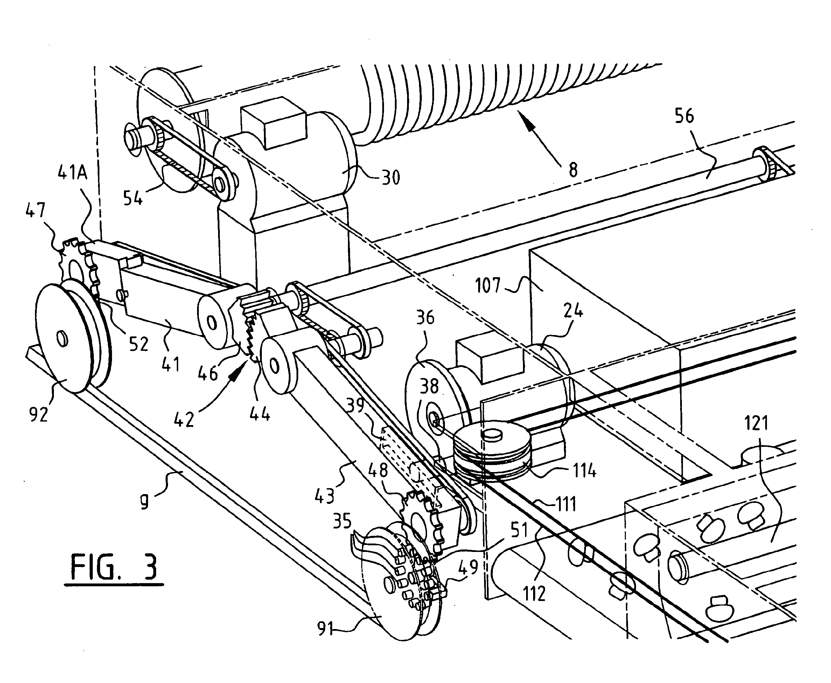

The operation of the height adjustment will be further described with reference to figure 3. The operation of the height adjustment on the other side of the device, as shown in figure 2, functions in the same manner.

Two support arms 41, 43 extend on either side from shafts 56, 59'. Wheel supports 51, 52 are arranged at the end of support arms 41, 43 in similar manner to the more readily visible wheel support 32, which is fixed to support arm 11a as shown in figure 2. Wheels 91, 92 are mounted on wheel supports 51, 52 by means of a shaft.

Two toothed coupling pieces 44, 46 are situated on the mutually facing sides of support arms 41 and 43. These coupling pieces are coupled to each other by means of the toothing, so that they must co-displace with each other. Both support arms will hereby tilt downward if one of the two is urged downward. In this case the frame 3 will move upward. In the reverse case the frame will move downward.

Urging of support arm 43 downward relative to the frame takes place by means of rotating the pin 38 downward. Pin 38 protrudes from the frame and into slot 39 of support arm 43. Pin 38 is arranged eccentrically on disc 36, which is coupled to motor 24 of the frame. By causing disc 36 to rotate by means of motor 24, pin 38 is moved relative to the frame. Support arm 43 will hereby also move relative to the frame. Support arm 41 will likewise rotate due to the coupling by means of coupling pieces 44 and 46 and the mutual toothing thereof, whereby the frame will move in vertical direction while itself remaining horizontally positioned.

On the other side of the device, as shown in figure 2, the same height-adjusting mechanism is present, be it in mirrored position. The height-adjusting mechanism for this side is operated by means of drive motor 22. The pin 27 driven by this motor moves in slot 29 in order to adjust the height of this side of the machine. Both sides of the machine can therefore be adjusted in height independently of each other. If the bed is slightly sloping, it hereby becomes possible to have the machine follow the slope of the bed. In support arm 11, 11a a tilting adjustment is also arranged in similar manner as in support arm 41, 41a.

In order to bring about a rotation relative to the horizontal plane of the frame, support arm 41 can be offset relative to 41a. The frame can hereby be tilted slightly, which has the advantage for instance that the knife can be tilted to some extent relative to the bed for a specific cutting angle of the crops.

Harvesting device 4 is placed on the front side of frame 3. This harvesting device 4 can be replaced by soil treatment devices, for instance for turning or levelling the soil of a bed. A cutting knife 6 is arranged in this harvesting module 4. Because the entire harvesting module is placed in front of the front wheels of frame 3, the working width of the knife can cover the full width of the bed. The knife is provided with a drive device (not shown) for moving the knife reciprocally for the purpose of severing. This drive device for the knife is driven by means of motor 72 and the rod 108 driven by the motor via an eccentric.

A brush 7 is positioned above the knife. This brush is rotatable for the purpose of holding the toadstools at the speed of forward movement of the machine such that they do not fall forward when severed by the knife.

The driving of the wheels of the frame takes place by motor 26 which is connected to drive shaft 56 by means of a drive belt. Similarly to the height adjustment, the drive mechanism is the same on the left and right-hand side of the machine. The drive mechanism of the wheels will be described with reference to figures 2 and 3. Drive shaft 56 is connected to the rear support arms 11, 41, in which it is bearing-mounted. The front support arms 13, 43 are further connected to the frame by means of auxiliary shafts 59. Auxiliary shafts 59 are connected to the drive shaft by means of drive belt 57. Auxiliary shafts are also arranged in bearing-mounted manner in support arms 13 and 11. Toothed wheels 17, 18, 47, 48 are situated at the end of the support arms. These toothed wheels are driven from drive shaft 56 and auxiliary shaft 59 by means of drive belts or chains 55. As can be seen best in the case of wheel 91 of figure 3, the teeth of toothed wheel 48 engage in drive pins 35 of wheel 91. Wheel 91 is hereby driven. Four-wheel driving of the machine is realized in that this is embodied in similar manner in the case of all four wheels. As already described in the foregoing, this drive construction is highly insusceptible to fouling and very easy to clean. In order to further prevent possible fouling, scraping blocks 49 are positioned closely to drive pins 35. One block 49 is shown; two such scraping blocks are preferably positioned per wheel. Scraping blocks 49 serve to scrape sand and mainly peat residues from pins 35. After scraping blocks 49 have scraped off peat residues, possibly remaining peat portions will be pushed out between the pins by the teeth of toothed wheel 48.

In daily practice the wheels travel over edges of the bed. These may be bed box edges or for instance a rail. The travel surface of the wheels is shown here as a U-shape with oblique side walls. It is also possible to use rubber wheels, steel wheels or toothed wheels to propel the frame. The choice of wheels will be optimized on the basis of the surface over which they have to travel.

For power supply purposes the machine is further provided with a cable reel 8. In one embodiment this cable reel is driven by means of motor 30. Motor 30 is connected to the cable reel via drive belt or chain 54. A normal electric motor could overheat during a temporary stoppage of the machine due to blocking of the reel. A so-called standstill motor is applied in order to prevent such overheating. Such a motor is provided with means for preventing overheating during standstill, wherein a certain force must still be produced to prevent the reel unrolling again. The motor is switched off during unrolling of the reel. During reversing of the machine over the bed after the harvesting the reel will roll up the cable again under tension of the motor. The use of such a reel with motor is recommended since the rolling-up forces become very great in the case of a relatively long cable of for instance more than 20, 30 or 40 metres.

For control purposes the machine comprises separate drive means for each electric motor in a housing (107). These drive means can switch on all drive motors individually and give them an individual speed. It hereby becomes possible to adjust optimally to each other the travel speed, the speed of movement of the knife and the rotational speed of the brush for the purpose of a harvesting method wherein the toadstools can for instance be harvested with as little damage as possible but nevertheless at a relatively high speed.

Figures 6A and 6B show a further embodiment of the harvesting device. In this embodiment discharge conveyor 90 is wider than the harvesting device, whereby it protrudes. In fig. 6A the discharge conveyor protrudes on the side of uprights 94 and 96, while in fig. 6B the discharge conveyor protrudes on the side of uprights 95 and 98.

An arrangement of uprights of the culture bed holders is further shown. Uprights 94 and 96 on the one side of the culture bed and uprights 95 and 98 on the other side of the culture bed are mutually offset and arranged alternately. The uprights support a number of culture beds one above another. Owing to the mutual offsetting of the uprights on either side of the culture bed, the harvesting device in which the discharge conveyor 90 protrudes on the side of uprights 94 and 96 (fig. 6A) can travel past the upright 95. In the other position of the discharge conveyor (fig. 6B), the discharge conveyor protrudes on the side of uprights 95 and 98 and can travel past the upright 96. By causing the discharge conveyor to protrude alternately on the one side and on the other side during harvesting, the harvesting device can travel to the end of the culture bed in continuous manner and harvest all the mushrooms. Discharge conveyor 90 herein serves as collecting buffer for the mushrooms during the change in the direction of movement and protruding direction.

An alternative embodiment for the protruding discharge conveyor is shown in fig. 1. Two tiltable flaps 127,128 are arranged close to both ends of a discharge conveyor which is substantially as long as the machine is wide. Both flaps can be lowered by means of a mechanism suitable for this purpose in order to discharge mushrooms in the direction of collecting containers or further conveyors, such as for instance in the situation of fig. 6A or B.

In the case of fig. 6A, the conveyor moves in the direction of arrow A'. In the case of fig. 6B, the conveyor moves in the direction of arrow A. In both cases the harvesting device travels in the direction of arrow B. Conveyor belts 91 and 92 are provided on either side of the culture bed in order to collect the mushrooms from discharge conveyor 90. Collecting containers can also be applied instead of conveyor belts. It is important that the height hereof can be adjusted to the height of discharge conveyor 90 of the harvesting device, so that the mushrooms are collected in the most gradual possible movement. Conveyor belt 92 moves in the direction of arrow D. Conveyor belt 91 moves in the direction of arrow C.

Using such a device it is even possible to harvest mushrooms which must meet the highest quality standards in respect of fresh sale to consumers. Such mushrooms have heretofore been harvested manually, which is very expensive.

The skilled person will be able to make many modifications on the basis of the different aspects of the above described embodiment. The rights sought are defined by the appended claims.

## Claims

1. Harvesting device (2) for crops such as toadstools, comprising:
- a frame (3),
- a separating member (6) coupled to the frame, the separating member extending substantially transversely of the harvesting direction over substantially the entire width of the device for separating parts of the crops for harvesting,
- a discharge conveyor (90) for discharging crops harvested by means of the separating member, and
- an intermediate conveyor (61) extending from the separating member to the discharge conveyor, **characterised by** the intermediate conveyor comprising:
- guide means for maintaining the orientation of the intermediate conveyor relative to the transverse direction thereof; and
- a wire mesh belt.

2. Harvesting device as claimed in claim 1, wherein the intermediate conveyor comprises a return bend on the side of the separating member with a diameter in the range of 0.1 - 5 cm, and more preferably 1 - 3 cm or 1 - 2 cm.

3. Harvesting device as claimed in claim 1 or 2, wherein on the side of the separating member the intermediate conveyor comprises a return guide rod (62) with guide channels (67).

4. Harvesting device as claimed in claim 1, 2 or 3, wherein the wire mesh belt is manufactured from metal and/or plastic.

5. Harvesting device as claimed in one or more of the foregoing claims, wherein the separating member comprises a tensioning frame.

6. Harvesting device as claimed in one or more of the foregoing claims, wherein the separating member comprises a knife (6).

7. Harvesting device as claimed in one or more of the foregoing claims, comprising a support member (9) extending at least above the separating member and/or the intermediate conveyor for the purpose of supporting the crops before, during and/or after severing thereof and/or during the transport by means of the intermediate conveyor.

8. Harvesting device as claimed in claim 7, wherein the support member comprises an endless belt.

9. Harvesting device as claimed in one or more of the claims 1-8, wherein the discharge conveyor is adapted to discharge the crops alternately on the one side and the other side of the device.

10. Harvesting device as claimed in claim 9, wherein the discharge conveyor comprises a conveyor belt which can move in two directions.

11. Harvesting device as claimed in claim 9 or 10, wherein the discharge conveyor is adapted to protrude alternately from either side of the harvesting device.

12. Device for performing a bed and/or crop treatment, comprising a harvesting device as claimed in one or more of the claims 1-11, comprising
- a frame provided with front and rear wheels for travel thereof,
- height-adjusting means for adjusting the working height of the device, wherein the frame of the harvesting device can be connected to the frame of the device.

13. Method for harvesting crops from crop beds using a harvesting device as claimed in one or more of the claims 1-12.

14. Method as claimed in claim 13, wherein a discharge conveyor of a harvesting device discharges crops alternately on both sides of the crop bed.

15. Method as claimed in claim 14, comprising steps for causing the discharge conveyor to protrude alternately on both sides of the crop bed.

## Patentansprüche

1. Erntevorrichtung (2) für solche Kulturen wie Schirmpilze, umfassend:
einen Rahmen (3),
ein Trennelement (6), das mit dem Rahmen gekoppelt ist, wobei sich das Trennelement im Wesentlichen senkrecht zu der Ernterichtung über im Wesentlichen die gesamte Breite der Vorrichtung hin erstreckt, um Teile der Kulturen zur Ernte abzutrennen,
einen Entladeförderer (90) zum Entladen der mit Hilfe des Trennelements geernteten Kulturen und
einen Zwischenförderer (61), der sich von dem Trennelement aus zu dem Entladeförderer hin erstreckt,
**dadurch gekennzeichnet, dass** der Zwischenförderer umfasst:
Führungsmittel zum Beibehalten der Ausrichtung des Zwischenförderers in Bezug auf die Querrichtung desselben; und
einen Drahtgurt.

2. Erntevorrichtung nach Anspruch 1, bei welcher der Zwischenförderer eine Rückkrümmung an der Seite des Trennelements mit einem Durchmesser im Bereich von 0,1 - 5 cm und bevorzugter 1 - 3 cm oder 1 - 2 cm aufweist.

3. Erntevorrichtung nach Anspruch 1 oder 2, bei welcher der Zwischenförderer an der Seite des Trennelements eine Rückführungsstange (62) mit Führungskanälen (67) umfasst.

4. Erntevorrichtung nach Anspruch 1, 2 oder 3, bei welcher der Drahtgurt aus Metall und/oder Kunststoff hergestellt ist.

5. Erntevorrichtung nach einem oder mehreren der vorhergehenden Ansprüche, bei welcher das Trennelement einen Spannrahmen umfasst.

6. Erntevorrichtung nach einem oder mehreren der vorhergehenden Ansprüche, wobei das Trennelement ein Messer (6) umfasst.

7. Erntevorrichtung nach einem oder mehreren der vorhergehenden Ansprüche, welche ein Stützelement (9) umfasst, das sich zumindest oberhalb des Trennelements und/oder des Zwischenförderers erstreckt, und zwar zum Zwecke des Haltens der Kulturen vor, während und/oder nach dem Abtrennen dieser und/oder während des Transports mit Hilfe des Zwischenförderers.

8. Erntevorrichtung nach Anspruch 7, bei welcher das Stützelement ein Endlosband umfasst.

9. Erntevorrichtung nach einem oder mehreren der Ansprüche 1 bis 8, bei welcher der Entladeförderer dafür ausgelegt ist, die Kulturen wechselweise auf der einen und der anderen Seite der Vorrichtung zu entladen.

10. Erntevorrichtung nach Anspruch 9, bei welcher der Entladeförderer ein Förderband umfasst, das sich in zwei Richtungen bewegen kann.

11. Erntevorrichtung nach Anspruch 9 oder 10, bei welcher der Entladeförderer dafür ausgelegt ist, wechselweise von einer der Seiten der Erntevorrichtung vorzustehen.

12. Vorrichtung zum Ausführen einer Beet- und/oder Kulturenbehandlung, welche eine Erntevorrichtung wie in einem oder mehreren der Ansprüche 1 bis 11 beansprucht umfasst, umfassend:
einen Rahmen, der mit vorderen und hinteren Rädern zur Bewegung desselben ausgerüstet ist,
Höheneinstellmittel zum Einstellen der Arbeitshöhe der Vorrichtung, wobei der Rahmen der Erntevorrichtung mit dem Rahmen der Vorrichtung verbunden werden kann.

13. Verfahren zum Ernten von Kulturen von Kulturenbeeten mit Hilfe einer Erntevorrichtung gemäß einem oder mehreren der Ansprüche 1 bis 12.

14. Verfahren nach Anspruch 13, bei welchem ein Entladeförderer einer Erntevorrichtung die Kulturen wechselweise an beiden Seiten des Kulturbeetes ablädt.

15. Verfahren nach Anspruch 14, welches Schritte umfasst, um zu bewirken, dass der Entladeförderer wechselweise an beiden Seiten des Kulturbeetes vorsteht.

## Revendications

1. Dispositif de récolte (2) pour des cultures telles que des champignons vénéneux, comprenant :
un châssis (3),
un élément de séparation (6) couplé au châssis, l'élément de séparation s'étendant de manière sensiblement transversale par rapport à la direction de récolte sensiblement sur toute la largeur du dispositif pour séparer des parties des cultures pour la récolte,
un convoyeur de décharge (90) pour décharger les cultures récoltées au moyen de l'élément de séparation, et
un convoyeur intermédiaire (61) s'étendant de l'élément de séparation au convoyeur de décharge, **caractérisé en ce que** le convoyeur intermédiaire comprend :
des moyens de guidage pour maintenir l'orientation du convoyeur intermédiaire par rapport à sa direction transversale ; et
une courroie à tamis.

2. Dispositif de récolte selon la revendication 1, dans lequel le convoyeur intermédiaire comprend une courbe de retour sur le côté de l'élément de séparation avec un diamètre de l'ordre de 0,1 - 5 cm et de préférence de 1- 3 cm ou 1 - 2 cm.

3. Dispositif de récolte selon la revendication 1 ou 2, dans lequel sur le côté de l'élément de séparation, le convoyeur intermédiaire comprend une tige de guidage de retour (62) avec des canaux de guidage (67).

4. Dispositif de récolte selon la revendication 1, 2 ou 3, dans lequel la courroie à tamis est fabriquée à partir de métal et/ou de plastique.

5. Dispositif de récolte selon une ou plusieurs des revendications précédentes, dans lequel l'élément de séparation comprend un châssis de tension.

6. Dispositif de récolte selon une ou plusieurs des revendications précédentes, dans lequel l'élément de séparation comprend une lame (6).

7. Dispositif de récolte selon une ou plusieurs des revendications précédentes, comprenant un élément de support (9) s'étendant au moins au-dessus de l'élément de séparation et/ou du convoyeur intermédiaire afin de supporter les cultures avant, pendant et/ou après leur coupe et/ou pendant le transport au moyen du convoyeur intermédiaire.

8. Dispositif de récolte selon la revendication 7, dans lequel l'élément de support comprend une courroie sans fin.

9. Dispositif de récolte selon une ou plusieurs des revendications 1 à 8, dans lequel le convoyeur de décharge est adapté pour décharger les cultures de manière alternée d'un côté et de l'autre du dispositif.

10. Dispositif de récolte selon la revendication 9, dans lequel le convoyeur de décharge comprend une courroie transporteuse qui peut se déplacer dans deux directions.

11. Dispositif de récolte selon la revendication 9 ou 10, dans lequel le convoyeur de décharge est adapté pour faire saillie de manière alternée de chaque côté du dispositif de récolte.

12. Dispositif pour réaliser un traitement de lit et/ou de culture, comprenant un dispositif de récolte selon une ou plusieurs des revendications 1 à 11, comprenant :
un châssis doté de roues avant et arrière pour son déplacement,
des moyens d'ajustement de hauteur pour ajuster la hauteur de travail du dispositif, dans lequel le châssis du dispositif de récolte peut être raccordé au châssis du dispositif.

13. Procédé pour récolter des cultures des lits de culture en utilisant un dispositif de récolte selon une ou plusieurs des revendications 1 à 12.

14. Procédé selon la revendication 13, dans lequel un convoyeur de décharge d'un dispositif de récolte décharge les cultures de manière alternée des deux côtés du lit de récolte.

15. Procédé selon la revendication 14, comprenant l'étape consistant à amener le convoyeur de décharge à faire saillie de manière alternée des deux côtés du lit de récolte.
